# EUROPÄISCHE PATENTSCHRIFT

(11) **EP 0 814 891 B1**
(45) Veröffentlichungstag und Bekanntmachung des Hinweises auf die Patenterteilung: **18.07.2001**
(21) Anmeldenummer: 96907374.1
(22) Anmeldetag: 07.03.1996
(51) Int. Cl.: B01D 46/24

(54) **LUFTENTÖLELEMENT**
AIR DE-OILING ELEMENT
DESHUILEUR D'AIR

(30) Priorität: 11.03.1995 DE 19508815
(43) Veröffentlichungstag der Anmeldung: 07.01.1998
(73) Patentinhaber: FILTERWERK MANN & HUMMEL GMBH, 71631 Ludwigsburg (DE)
(72) Erfinder: DUNGS, Günter, D-71696 Möglingen (DE); EPPEL, Otto, D-67364 Speyer (DE); KELLER, Lothar, D-70176 Stuttgart (DE); KLEIN, Kurt, Glenview, IL 60025 (US); KOLITZ, Eberhard, D-74321 Bietigheim-Bissingen (DE); RUST, Helmut, D-67346 Speyer (DE); SAUTER, Erwin, D-67373 Dudenhofen (DE); SCHÖN, Alfred, D-67346 Speyer (DE); WINTER, Hans-Michael, D-67373 Dudenhofen (DE); WOLF, Michael, D-71126 Gäufelden (DE)
(74) Vertreter: Voth, Gerhard, Dipl.-Ing.
(86) Internationale Anmeldenummer: EP9600960
(87) Internationale Veröffentlichungsnummer: WO9628238

(56) Entgegenhaltungen:
- WO-A-88/06058
- WO-A-90/05573
- DE-U- 8 501 736
- GB-A- 456 468
- GB-A- 2 261 830

## Beschreibung

Die Erfindung betrifft ein Luftentölelement nach dem Oberbegriff des Hauptanspruchs.

Aus der WO 88/06 058 ist ein Luftentölelement bekannt. Dieses besteht im wesentlichen aus einem zylindrischen Gehäuse, in dem ein Filterelement angeordnet ist. Im Gehäuse befinden sich Zutrittsöffnungen sowie Austrittsöffnungen. Die ölhaltige Luft durchströmt das Filterelement und der Ölnebel koaguliert im Filterelement zu größeren Tropfen, die sich am Boden des Luft/Ölseparators sammeln und von dort ausgetragen werden können.

Ein solches Luftentölelement besteht üblicherweise aus einem Stützrohr, an welchem das Filterelement angeordnet ist sowie, einem Befestigungsflansch und einer Endscheibe. Das gesamte System muß aus einem korrosionsbeständigen Material hergestellt sein, um Defekte aufgrund von Korrosion bzw. das Eintreten von Partikeln in die Druckluftleitungen bzw. Luftleitungen zu verhindern.

Bisher wurde deshalb ein solches Luftentölelement zunächst mit seinen metallischen Bestandteilen hergestellt und anschließend komplett verzinkt, um zu gewährleisten, daß keine unverzinkten Oberflächen eine Angriffsmöglichkeit für Korrosion bilden.

Es ist weiterhin aus dem DE GM 85 01 736 ein Luftentölelement bekannt. Bei diesem ist das Abscheideelement als ein ringförmiger Coalescer ausgebildet, der die feinen Öltröpfchen in an sich bekannter Weise zu größeren, sich durch Schwerkraft im Abscheideelement und nach unten absetzenden öltropfen zusammenballt. Das Luftentölelement ist nach Art eines Wechselfilters ausgestaltet und kann komplett ausgetauscht werden. Auch hier besteht dieses Element aus einer Vielzahl von metallischen Teilen, die vor der endgültigen Montage mit einem korrosionsfesten Überzug versehen werden müssen.

Der Erfindung liegt die Aufgabe zugrunde, ein Luftentölelement zu schaffen, das einfach herstellbar, sowie korrosionsfest ist und sich dadurch auszeichnet, daß nur eine minimale Anzahl von Teilen bzw. Elementen im Rahmen der durchzuführenden Wartung ausgetauscht werden muß.

Diese Aufgabe wird ausgehend von dem Oberbegriff des Hauptanspruchs durch dessen kennzeichnenden Merkmale gelöst.

Der Vorteil des erfindungsgemäßen Luftentölelements liegt darin, daß durch eine geeignete Fügetechnik ein nachträgliches Verzinken oder überziehen mit korrosionshemmenden Mitteln bei den montierten Metallteilen nicht mehr erforderlich ist. Dies bedeutet, daß die einzelnen Elemente, Flansch, Endscheibe oder Stützrohr bereits mit einem korrosionshemmenden Überzug versehen sind und die Verbindungstechnik so gewählt ist, daß eine Beeinträchtigung dieses Überzugs und damit der Funktionsfähigkeit ausgeschlossen ist.

Eins Ausgestaltung der Erfindung sieht vor, das Stützrohr aus spiralgefalztem, verzinktem Rohr herzustellen. Dieses Rohr hat folgende Vorteile: Es wird endlos vom Coil gefertigt und in der Hauptzeit des Herstellvorgangs in einem spanlosen Verfahren automatisch auf Länge abgetrennt.

Der Vorteil dieses Verfahrens besteht darin, daß ungelochtes Blech verwendet werden kann wobei die Lochung bei der Rohrherstellung vorgenommen wird. Außerdem ersetzt die Falzverbindung eine thermische Verbindung, die vorhandene Zinkschicht wird dadurch nicht beschädigt. Durch den Spiralfalz wird die Druckstabilität wesentlich erhöht, somit kann die Blechstärke reduziert werden.

Eine Befestigung des Luftentölelements bzw. anderer Komponenten an dem Luftentölelement kann zweckmäßigerweise mit einem sogenannten Stanzbolzen erfolgen. Ein solcher Stanzbolzen ist in der Art eines Blechstempels ausgebildet und trennt beim Einpressen an der entsprechenden Position das Blech auf. Gleichzeitig wird der Rand des Bolzens umgebördelt und mit dem Blech verdrehsicher und dicht verbunden. Die gleiche Funktion kann auch mit einer Stanzmutter ausgeführt werden.

Zur Erhöhung der Stabilität des Vlieses, insbesondere in dem Bereich, der nicht durch ein Stützrohr abgesichert ist, kann das Vlies mit einem Traggitter versehen sein. Dieses Traggitter ist in das Vlies eingeprägt und verhindert eine unzulässige Verformung.

In einer weiteren Ausgestaltung der Erfindung sind die Endbereiche des Luftentölelements mit einer Vergußmasse abgedichtet. Es ist zweckmäßig, den Flansch oder die Endscheibe mit einer schalenförmigen Aufnahme zu versehen. In diese Aufnahme kann die Vergußmasse im flüssigen Zustand eingebracht werden und härtet kalt aus.

Die Abdichtung des Flansches an einem Gehäuse kann durch die Anordnung einer Weichgummidichtung verbessert werden. Eine solche Weichgummidichtung ist sehr kostengünstig dadurch herstellbar, daß das Dichtungselement aus einem Schlauchprofil gestochen wird.

Diese und weitere Merkmale von bevorzugten Weiterbildungen der Erfindung gehen außer aus den Ansprüchen auch aus der Beschreibung und den Zeichnungen hervor.

Die Erfindung wird nachfolgend anhand von Ausführungsbeispielen näher erläutert. Es zeigt
- Figur 1: ein Luftentölelement in einer Schnittdarstellung,
- Figur 2: ein Luftentölelement mit einem Bördelring,
- Figur 3: eine weitere Variante eines. Luftentölelements.

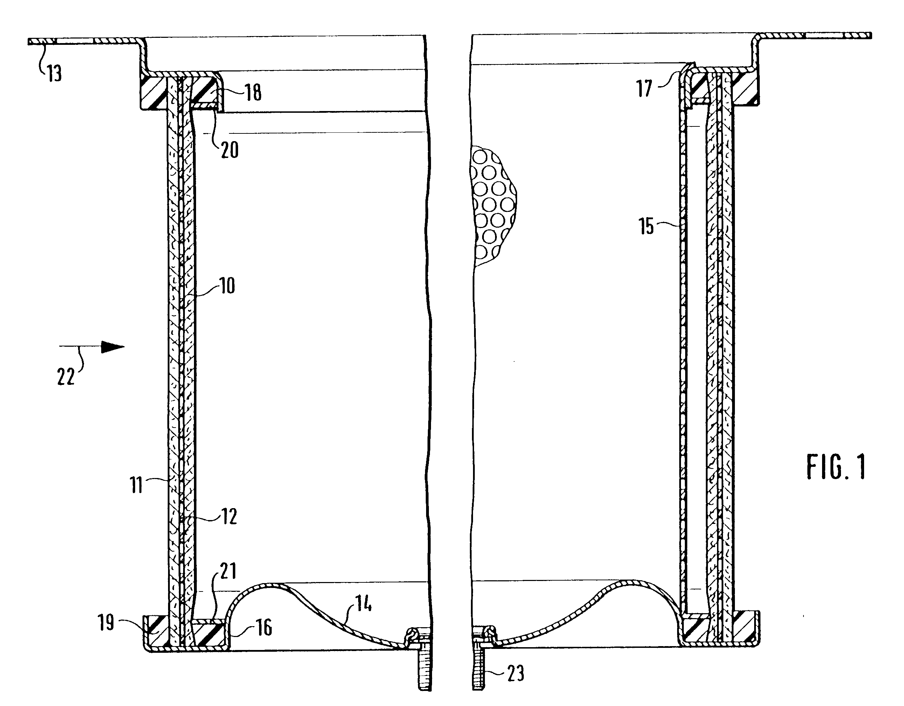

Das Luftentölelement gemäß Figur 1 besteht aus einem Drainagevlies 10 und einer Filtermatte 11 (Coaleszenzelement). Zwischen diesen beiden Abscheideelementen ist ein Mittelrohr 12 angeordnet. An der linken Stirnseite befindet sich ein Anschlußflansch 13. Die rechte Stirnseite ist mit einem Boden 14 versehen. Der Boden 14 und der Anschlußflansch 13 sind mit dem Stützrohr 15 verbunden, wobei dieses Stürzrohr 15 am Boden im Bereich 16 punktgeschweißt ist. Auf der gegenüberliegenden Seite ist das Stützrohr um den Flansch 13 im Bereich 17 gebördelt. Aufgrund der abstützenden Wirkung des Mittelrohrs 12 wird somit eine zuverlässige Verbindung der einzelnen Teile geschaffen. Vlies 10, Filtermatte 11 und Mittelrohr 12 sind stirnseitig mit einer Vergußmasse 18, 19 versehen. Damit wird eine zuverlässige Abdichtung von der Außenseite des Luftentölelements zu dessen Innenseite erzielt. Zur Fixierung des Vlieses 10 im Flanschbereich sind, wie in Figur 1 dargestellt, Distanzhalter 20, 21 angeordnet. Es besteht auch die Möglichkeit, dieses Vlies mit Klammern oder ähnlichem zu fixieren.

Die zu entölende Luft strömt das Element von außen gemäß dem Pfeil 22 an und durchströmt dieses radial nach innen. Das in dieser Luft enthaltene Öl bzw. der Ölnebel oder andere Bestandteile wird von der Filtermatte und dem Vlies zurückgehalten. Der Ölnebel koaliert zu größeren Tropfen, sammelt sich bei hängender Anordnung des Luftentölelements im Boden 14 und kann von dort ausgetragen werden.

Zum Befestigen eines Pralltopfes ist der Boden mit einem sogenannten Stanzbolzen 23 versehen. Dieser Stanzbolzen ist nach Art eines Stempels ausgebildet. Beim Einpressen in den Boden stanzt dieser die Aufnahmebohrung aus und wird durch ein entsprechendes Werkzeug mit dem Boden verbunden. Dieses Ausstanzen und Verbinden erfolgt in einem Arbeitsgang und stellt eine zuverlässige, dichte und verdrehsichere Verbindetechnik dar. Sämtliche metallischen Teile, wie Mittelrohr 12, Anschlußflansch 13, Boden 14 und Stützrohr 15 bestehen aus verzinktem Blech. Damit ist gewährleistet, daß eine Korrosion des Luftentölelements auch bei längerer und auch unsachgemäßer Lagerung nicht auftritt. Zur Vermeidung von Korrosion im Bereich des Schweißpunkts 16 ist dieser auf der Seite des Reinluftbereichs, also im Inneren des Luftentölelements, mit der Vergußmasse 19 abgedeckt. Im Rohluftbereich ist eine Abdeckung nicht erforderlich. Sollten sich dort aufgrund von Korrosion Partikel lösen, werden diese durch das Vlies 10 wirksam ausgefiltert.

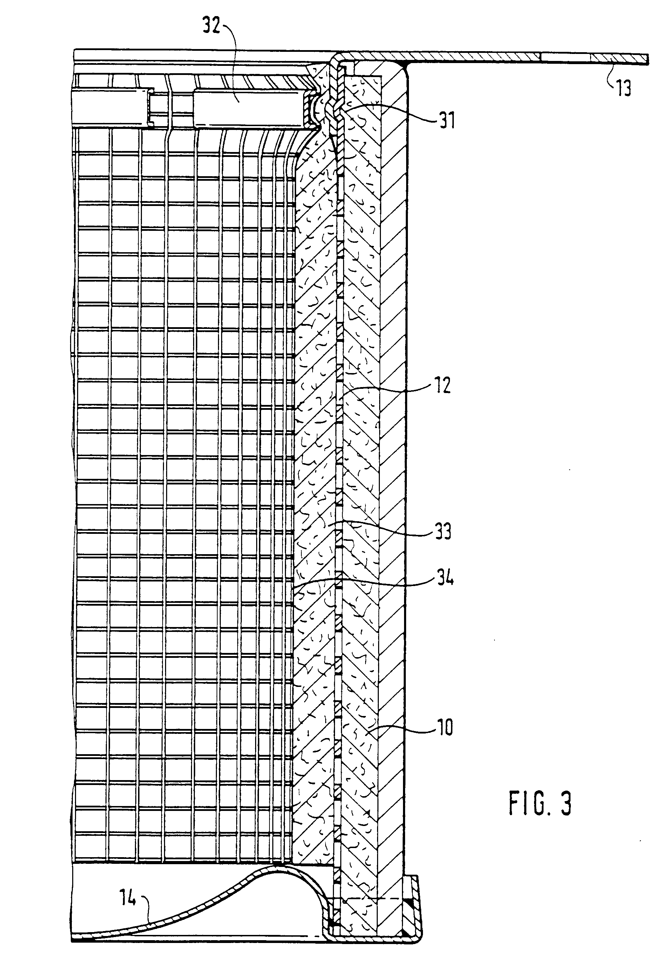

In Figur 2 ist ein Luftentölelement gezeigt, das besonders einfach aufgebaut ist und nur aus wenigen Elementen besteht. Der wesentliche Unterschied zu den bisher gezeigten Luftentölelementen liegt darin, daß die Verbindung zwischen Anschlußflansch 13 und dem Mittelrohr 12 durch eine umlaufende oder punktuelle Bördelung im Bereich 31 erfolgt. In diesem Bereich ist ein Bördelring 32 angeordnet, an welchem sich die einzelnen Teile abstützen. In den Bördelbereich ist ein Drainagevlies 33 eingebettet und wird damit stirnseitig fixiert.

Im Bereich des Bodens 14 ist das Mittelrohr 12 mit der Filtermatte 10 und dem Vlies 12 mit einer Vergußmasse befestigt. Eine mittlere Abstützung des Drainagevlieses ist nicht erforderlich, da dieses Drainagevlies mit Stützstegen 34 versehen ist. Diese Stützstege sind in das Drainagevlies eingeprägt und stellen eine zuverlässige Stabilisierung dar.

Figur 3 zeigt eine weitere Variante eines Luftentölelements mit einer weiteren Fügetechnik. Der Aufbau des Luftentölelements im unteren Halbschnitt entspricht im wesentlichen dem in Figur 1 gezeigten. Anschlußflansch 13 und Mittelrohr 12 sowie Boden 14 sind mittels Durchsetzfügen im Bereich 35, 36 miteinander verbunden.

Anstelle der Durchsetzfügetechnik kann auch eine Verbindungstechnik mittels Stanznieten angewendet werden.

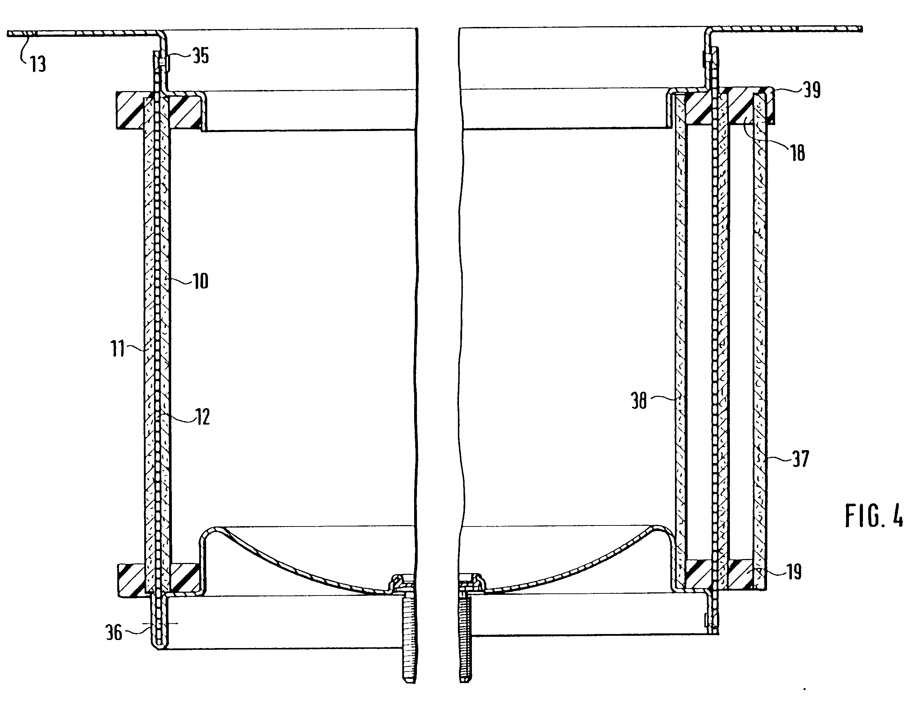

Bei dieser Verbindungstechnik wird eine Zerstörung der verzinkten Oberfläche der Bleche vermieden. Außerdem stellt diese Verbindugnstechnik eine kostensparende und zuverlässie Variante zu den üblichen Schweißverbindungen dar. Im oberen Halbschnitt der Figur 4 sind zusätzlich zu den Filterelementen, wie Filtermatte und Vlies, noch ein Vorabscheiderelement als Vorabscheidervlies 37 und ein nachgeschaltetes Element 38 angeordnet. Sämtliche Elemente und Filterschichten können im Flanschbereich mit einer geeigneten Vergußmasses 18 und im Bodenbereich mit einer Vergußmasse 19 verbunden sein. Die Vergußmasse 18 ist in eine Leimschale eingebettet. Diese Leimschale verbleibt an dem Luftentölelement. Selbstverständlich besteht auch die Möglichkeit, eine Leimschale nur während des Herstellprozesses einzusetzen und diese nach der Montage der einzelnen Teile zu entfernen. Eine solche Variante ist im unteren Bereich der Figur 4 (Vergußmasse 19) gezeigt.

## Patentansprüche

1. Luftentölelement, bestehend aus einem Anschlußflansch, einem im wesentlichen zylinderförmigen Mittelrohr, wenigstens einem, auf dem Mittelrohr angeordneten Vlieselement, sowie einer der Flanschseite gegenüberliegend angeordneten Endscheibe, wobei das Mittelrohr und/oder der Flansch und/oder die Endscheibe aus verzinktem Blech besteht und ein Stützrohr (15) vorgesehen ist, dadurch gekennzeichnet, daß das Stützrohr (15) an der Flanschseite formschlüssig mit dem Flansch verbunden ist und an der gegenüberliegenden Seite mit der Endscheibe verschweißt ist, wobei die einzelnen Elemente korrosionsfrei miteinander verbunden sind und wobei die Schweißverbindung wenigstens einseitig mit einer Vergußmasse (19), die auch die Endbereiche des Luftelements abdichtet, abgedeckt ist.

2. Luftentölelement, nach Anspruch 1, dadurch gekennzeichnet, daß wenigstens ein rohrförmiges Element ein spiralgefalztes, vorverzinktes Rohr ist.

3. Luftentölelement, nach Anspruch 1, dadurch gekennzeichnet, daß im Zentrum der Endscheibe /14) ein Stanzbolzen (23) oder eine Stanzmutter angeordnet ist.

4. Luftentölelement, nach Anspruch 1, dadurch gekennzeichnet, daß das Vlies (33) zur Abstützung auf der, dem Mittelrohr gegenüberliegenden Seite, mit einem Traggitter (34) versehen ist oder eine elastische Matte auf de Vlies (33) angeordnet ist.

5. Luftentölelement, nach Anspruch 1, dadurch gekennzeichnet, daß die Filtermatte (11) und/oder das Vlies (10) mit dem Mittelrohr (12) im Bereich des Flanschs (13) oder der Endscheibe (14) eine Vergußmasse (18, 19) aufweist.

6. Luftentölelement, nach Anspruch 5, dadurch gekennzeichnet, daß ein Vorabscheidervlies (26) mit einem weiteren Trägerrohr vorgesehen ist, wobei das Trägerrohr mit der Endscheibe oder dem Flansch und/oder der Vergußmasse korrosionsfrei verbunden ist.

7. Luftentölelement nach einem der vorherigen Ansprüche, dadurch gekennzeichnet, daß der Flansch und/oder die Endscheibe eine schalenförmige Aufnahme (39) bilden, in welcher das Vlies (11) mit dem Mittelrohr (12) mittels einer Vergußmasse (18) befestigt ist.

## Claims

1. Air de-oiling device, comprising a connecting flange, a substantially cylindrical central pipe, at least one web component disposed on the central pipe, and an end disc disposed opposite the flange side, the central pipe and/or the flange and/or the end disc being formed from galvanised sheet metal, and a supporting pipe (15) being provided, characterised in that the supporting pipe (15) is connected to the flange in a form-locking manner on the flange side and is welded to the end disc on the oppositely situated side, the individual components being interconnected in a corrosion-resistant manner, and the weld joint being covered, at least on one side, with a sealing compound (19) which also seals the end regions of the air de-oiling device.

2. Air de-oiling device according to claim 1, characterised in that at least one tubular component is a helically notched, pregalvanised pipe.

3. Air de-oiling device according to claim 1, characterised in that a stamping pin (23) or a stamping nut is disposed in the centre of the end disc (14).

4. Air de-oiling device according to claim 1, characterised in that the web (33) for support on the side situated opposite the central pipe, is provided with a supporting lattice (34), or a resilient mat is disposed on the web (33).

5. Air de-oiling device according to claim 1, characterised in that a sealing compound (18, 19) is provided for sealing the filter mat (11) and/or the web (10) with the central pipe (12) in the region of the flange (13) or the end disc (14).

6. Air de-oiling device according to claim 5, characterised in that a prefiltering web (26) is provided with an additional supporting pipe, the supporting pipe being connected, in a corrosion-resistant manner, to the end disc or the flange and/or the sealing compound.

7. Air de-oiling device according to one of the previous claims, characterised in that the flange and/or the end disc form/forms a dish-shaped receiver (39), in which the web (11) is secured to the central pipe (12) by means of a sealing compound (18).

## Revendications

1. Déshuileur d'air composé d'une bride de raccordement, d'un tube central essentiellement cylindrique, d'un élément de feutre installé sur le tube central ainsi que d'un disque d'extrémité en regard du côté muni de la bride,
le tube central et/ou la bride et/ou le disque d'extrémité étant en tôle étamée, avec un tube support (15),
caractérisé en ce que
du côté de la bride, le tube support (15) est relié à la bride par une liaison de forme, et du côté opposé, il est soudé au disque d'extrémité,
les différents éléments étant réunis par un moyen anticorrosion et la liaison soudée étant recouverte au moins d'un côté avec une masse coulée (19) qui assure l'étanchéité également des zones d'extrémité du déshuileur.

2. Déshuileur d'air selon la revendication 1,
caractérisé en ce qu'
au moins un élément tubulaire est un tube pré-étamé, plié en spirale.

3. Déshuileur d'air selon la revendication 1,
caractérisé par
un embout fileté (23) estampé ou un écrou estampé est prévu au centre du disque d'extrémité (14).

4. Déshuileur d'air selon la revendication 1,
caractérisé en ce que
le feutre (33) est muni d'une grille support (34) ou une nappe élastique est prévue sur le feutre (33) pour le soutenir du côté opposé à celui du tube central.

5. Déshuileur d'air selon la revendication 1,
caractérisé en ce que
la nappe de filtre (11) et/ou le feutre (10) avec le tube central (12) comportent une masse coulée (18, 19) dans la zone de la bride (13) ou du disque d'extrémité (14).

6. Déshuileur d'air selon la revendication 5,
caractérisé en ce qu'
un feutre de pré-séparation (26) est muni d'un autre tube support et celui-ci est relié au disque d'extrémité ou à la bride et/ou à la masse coulée par une liaison anti-corrosion.

7. Déshuileur d'air selon l'une quelconque des revendications précédentes,
caractérisé en ce que
la bride et/ou le disque d'extrémité constituent un logement (39) en forme de coquille, dans lequel est fixé le feutre (11) avec le tube central (12) à l'aide d'une masse coulée (18).
